# EUROPÄISCHE PATENTSCHRIFT

(11) **EP 1 985 001 B1**
(45) Veröffentlichungstag und Bekanntmachung des Hinweises auf die Patenterteilung: **13.06.2012**
(21) Anmeldenummer: 06818337.5
(22) Anmeldetag: 02.11.2006
(51) Int. Cl.: H02K 23/66, H02K 11/00

(54) **VERSTELLANTRIEB EINES KRAFTFAHRZEUGS**
DISPLACEMENT DRIVE OF A MOTOR VEHICLE
ENTRAINEMENT DE REGLAGE D'UN VEHICULE A MOTEUR

(30) Priorität: 04.02.2006 DE 202006001741 U
(43) Veröffentlichungstag der Anmeldung: 29.10.2008
(73) Patentinhaber: Brose Fahrzeugteile GmbH & Co. Kommanditgesellschaft Coburg, 96450 Coburg (DE)
(72) Erfinder: CARSTEN, Abert, 97437 Hassfurt (DE); SESSELMANN, Helmut, 96523 Steinach (DE)
(74) Vertreter: FDST Patentanwälte
(86) Internationale Anmeldenummer: PCT/EP2006/010510
(87) Internationale Veröffentlichungsnummer: WO 2007/087841

(56) Entgegenhaltungen:
- EP-A- 0 524 384
- WO-A-97/02646
- DE-A1- 1 538 374
- DE-A1- 2 638 954
- DE-A1- 4 221 424
- DE-A1- 4 327 217
- FR-A1- 2 680 920
- US-A- 2 754 464
- US-A- 4 082 968
- US-A1- 2004 140 724

## Beschreibung

Die Erfindung bezieht sich auf ein Verfahren und eine Vorrichtung zur Auswertung eines Sensorsignals eines Antriebsmotors eines Verstellantriebs eines Kraftfahrzeugs mit einem magnetischen Sensor.

Zur Positionserkennung, Drehrichtungserkennung, Drehzahlermittlung und/oder zur Erkennung eines Einklemmfalls einer motorisch angetriebenen Verstelleinrichtung eines Kraftfahrzeugs wird häufig ein Sensorsystem mit Stellungs- und/oder Drehrichtungssensoren eingesetzt. Ein derartiges Sensorsystem, das nach dem Sende- und Empfangsprinzip arbeiten, benötigen üblicherweise zusätzlich zu einem Empfänger in Form beispielsweise eines Hall-Sensors oder einer Spule einen Sender in Form einer Magnetscheibe oder eines Ringmagneten mit einer Anzahl von Magnetpolen, d.h. mit mindestens einem Nordpol und einem Südpol.

Bei einem rotierenden Antrieb oder bei einer linearen Verstellung, wie beispielsweise einer Sitzverstellung, zum Erzielen einer konstanten Verstellgeschwindigkeit über den Verstellweg sind an die Auflösung des Sensorsystems häufig hohe Anforderungen gestellt, um insbesondere in Verbindung mit einem Einklemmschutzsystem möglichst kurze Reaktionszeiten zu ermöglichen.

Hierzu ist aus der DE 198 35 091 C1 ein Verfahren zur Steuerung und Regelung motorisch angetriebener Verstelleinrichtungen in Kraftfahrzeugen bekannt. Dabei ist eine Sensorik mit einem mit der Antriebswelle eines Antriebsmotors des Verstellantriebs verbundenen Signalgeber in Form eines die Senderfunktion übernehmenden Multipolmagneten und mit einem Sensor in Form eines magnetosensitiven Elementes eingesetzt. Eine Elektronikeinheit dient zur Auswertung der Sensorsignale.

Bei einer Ausführungsform gemäß der WO 03/019751 A1 ist auf die Antriebswelle eines Kommutatormotors ein die Senderfunktion übernehmender Ringmagnet aufgesetzt, dem berührungslos gegenüberliegend ein mit einer Auswerteelektronik verbundener Hall-Sensor zugeordnet ist. Der empfängerseitige Sensor liefert infolge des Hall-Effektes während jeder Umdrehung der Motorwelle eine der Anzahl der Magnetpole des mit der Rotorwelle rotierenden Ringmagneten entsprechende Anzahl von Signalimpulsen. Mittels der dem Sensor nachgeschalteten Auswerteelektronik kann anhand der Abfolge der einzelnen Signalimpulse sowie aus der Periodendauer und der Impulslänge die Drehrichtung bzw. die Drehzahl und damit wiederum das Motormoment ermittelt werden. Hieraus wiederum können die aktuelle Position eines von dem Verstellantrieb bewegten Verstellelementes, beispielsweise einer Fensterscheibe, bestimmt und darüber hinaus ein Einklemmfall erkannt werden.

Bei einem beispielsweise aus der EP 0 524 384 A1, aus der WO 97/02646 A1 oder aus der DE 43 27 217 A1 bekannten alternativen System, bei dem üblicherweise ein gleichstromgespeister Stabankermotor eingesetzt ist, kann mittels eines Hall-Sensors über eine durch den Kommutierungsvorgang des Antriebsmotors bedingte Stromwelligkeit zur Ermittlung der Drehzahl, Drehrichtung und Verstellposition ausgewertet werden.

Der Erfindung liegt die Aufgabe zugrunde, eine möglichst hohe Integration von Verstellantrieb und Sensorik zu erzielen.

Diese Aufgabe wird erfindungsgemäß gelöst durch die Merkmale der Ansprüche 1 und 5. Vorteilhafte Ausgestaltungen und Weiterbildungen sowie Varianten der Erfindung sind Gegenstand von Unteransprüchen.

Hierzu wird bei einem bestromten und somit von einem Ankerstrom durchflossenen Motoranker ein Sensorsignal erzeugt, das einen ersten Signalanteil und einen zweiten Signalanteil enthält. Der erste Signalanteil wird infolge einer Änderung eines magnetischen Parameters, insbesondere aufgrund einer Änderung der magnetischen Flussdichte des Erregerhauptfeldes, generiert. Der zweite Signalanteil wird infolge eines Ankerquerfeldes, insbesondere eines Querfeldanteils des Ankerquerfeldes, generiert. Dieser zweite Signalanteil (Offset) wird vorzugsweise zur Bestimmung des aktuellen Motormomentes des Antriebsmotors aus dem Sensorsignal herausgefiltert. Der jeweilige, an einer entsprechenden Sensorposition vorhandene Querfeldanteil des Ankerquerfeldes kann vorzugsweise auch zur Drehrichtungserkennung herangezogen werden.

Bei einer Vorrichtung zur Durchführung des Verfahrens, insbesondere zur Positions-, Drehrichtungs- und Einklemmfall- oder Drehzahländerungserkennung bei einem Verstellantrieb eines Kraftfahrzeugs, mit einem Antriebsmotor, der einen ein magnetisches Erreger- oder Erregerhauptfeld erzeugenden Motormagneten und einen zwischen dessen Magnetpolen drehbar angeordneten Motoranker aufweist, ist zur Erhöhung der Integration einer Sensorik ein magnetosensitiver Sensor zur Erfassung der magnetischen Flussdichteänderung, einer magnetischen Widerstandsänderung und/oder einer Induktionsänderung, beispielweise einer Änderung der Luftspaltinduktion, derart positioniert, dass dieser während einer Ankerdrehung eine Änderung der magnetischen Flussdichte des Erregerhauptfeldes erfasst. Bei vom Ankerstrom durchflossenem Motoranker enthält das vom Sensor erzeugte Signal den an der Sensorposition in Folge der Änderung der magnetischen Flussdichte des Erregerhauptfeldes generierten ersten Signalanteil und den in Folge eines Querfeldanteils eines Ankerquerfeldes generierten zweiten Signalanteil.

Demnach weist der Verstellantrieb einen Antriebsmotor und einen bevorzugt in dessen Erregerhauptfeld integrierten Sensor auf. Der Antriebsmotor umfasst zur Erzeugung des Erregerhauptfeldes vorzugsweise ständerseitig einen Permanentmagneten und einen zwischen dessen zweckmäßigerweise zwei Magnetpolen drehbar angeordneten Motoranker auf. Der Motoranker weist eine Anzahl von Ankerzähnen oder -polen mit dazwischen liegenden Ankernuten auf. Als Motormagnet ist prinzipiell auch ein Elektromagnet einsetzbar. Bei zweckmäßiger Verwendung eines Permanentmagneten als Motormagnet sind die Ankerzähne mit einer bestrombaren Motorwicklung versehen. Der Verstellantrieb dient zum Antrieb eines Verstellelementes des Kraftfahrzeuges, insbesondere einer Fensterscheibe, eines Sitzes, einer Heckklappe oder eines Schiebedaches.

Der magnetische Sensor ist vorzugsweise ein Hall-Sensor. Die Position des magnetischen Sensors ist dadurch bestimmt, dass dieser stets dem stationären Erregerhauptfeld ausgesetzt ist. Dadurch arbeitet der Sensor bereits in einem festen Arbeitspunkt mit einem entsprechend Signalgrundpegel in Form der sensorseitig in Folge des galvanomagnetischen Effektes, zu dem auch der Hall-Effekt gehört, abgreifbaren Spannung bzw. Hall-Spannung: Während einer Ankerdrehung des Motorankers detektiert der Sensor eine Änderung der magnetischen Flussdichte des Erregerhauptfeldes aufgrund alternierend variierender Luftspaltinduktionen und/oder abwechselnd sich ändernder magnetischer Widerstände. Mit anderen Worten: Ausgehend von einem als Arbeitspunkt dienenden Signalgrundpegel erfasst der Sensor darüber hinaus Änderungen eines Parameters des vom Motormagneten erzeugten magnetischen Feldes aufgrund von sich in Umfangsrichtung ändernden Umfangsabschnitten des Motorankers mit alternierend wechselnden unterschiedlichen magnetischen Eigenschaften.

Die Erfindung geht dabei von der Überlegung aus, dass eine Erhöhung der Integration von Funktionen der Sensorik zur Positions- bzw. Drehrichtungserkennung oder Drehzahländerungen in einem Verstellantrieb eines Kraftfahrzeugs erreicht werden kann, wenn die Anzahl der separaten Funktionselemente oder -bauteile für die Sende- und Empfangsfunktionalität reduziert werden kann. Dies wiederum kann dadurch erreicht werden, dass beim Verstellantrieb selbst bereits vorhandene Funktionalitäten oder Mittel die Sende- oder Empfangsfunktion mit übernehmen. Nun ist ein für die Erzeugung eines empfängerseitigen Sensorsignals auf Basis des galvanomagnetischen Effektes erforderliches magnetisches Feld in Form des stationären magnetischen Erregerhauptfeldes des Antriebsmotors bereits vorhanden. Demnach könnte senderseitig ein zusätzliches magnetosensitives Element - insbesondere der üblicherweise eingesetzte Ringmagnet - entfallen, wenn während des Betriebs des Antriebsmotors eine Änderung eines magnetischen Parameters vorhanden und diese Änderung detektierbar wäre.

Der Erfindung liegt nun die Erkenntnis zugrunde, dass ausgehend vom durch den bereits vorhandenen Motormagneten erzeugten stationären Erregerhauptfeld an zumindest einer exponierten Stelle eine Änderung des Magnetfeldes infolge einer Drehbewegung des Motorankers resultiert. So ändert sich sowohl bei einem bestromten als auch bei einem nicht bestromten Motoranker die relative Permeabilität mit den sich in Umfangsrichtung ändernden Umfangsabschnitten in Form insbesondere der die exponierte Stelle alternierend passierenden Ankerzähne und Ankernuten. Grund hierfür ist, dass die Ankerzähne in der Regel eisenhaltig sind und somit partiell an der exponierten Stelle eine vergleichsweise große Luftspaltinduktion mit gleichzeitig geringem magnetischen Widerstand bewirken, während eine die exponierte Stelle passierende Ankernut zu einer vergleichsweise geringen Luftspaltinduktion mit relativ großem magnetischem Widerstand führt. Dieser dynamische und periodische Wechsel der relativen Permeabilität µᵣ führt gemäß der Beziehung B = µᵣ · (µ₀ · H) zu einer entsprechenden Änderung der magnetischen Flussdichte B an der exponierten Stelle.

Ein an der exponierten Stelle positionierter magnetosensitiver Sensor oder Hall-Sensor erzeugt dann gemäß der Beziehung U_{H} ≈ I · B ein Sensor- bzw. Hall-Spannungs-Signal, das bei den Sensor durchfließenden konstantem Strom I durch die Änderungen der magnetischen Flussdichte B resultierende Pegeländerungen und somit entsprechende Signalimpulse enthält. Die Anzahl der Signalimpulse des Sensorsignals entspricht dabei der Anzahl der Ankerzähne des Motorankers.

Durch die Anordnung eines magnetosensitiven Elementes an der oder jeder exponierten Stelle wird somit ein auswertbares Sensorsignal erzeugt. Dabei übernimmt der als vierpoliger Permanentmagnet mit zwei Nordpolen und zwei Südpolen oder vorzugsweise als zweipoliger Permanentmagnet mit einem Nordpol und mit einem Südpol ausgeführte Motormagnet eine Doppelfunktion. So erzeugt der beim Antriebsmotor bereits vorhandene Permanentmagnet einerseits das stationäre magnetische Erregerhauptfeld und andererseits innerhalb der Sensorik die Senderfunktion des Sende- und Empfangssystems.

Die durch diese magnetische Polfühligkeit oder Reluktanz hervorgerufenen Signalimpulse resultieren aus einer Grundfeldstärke des stationären Erregerhauptfeldes und einem überlagerten Wechselfeld mit sich während jeder Ankerdrehung des Motorankers periodisch ändernder Wechselfeldstärke. Dabei ist gegenüber einem insbesondere aus Kostengründen lediglich 2- oder 4-poligen zusätzlichen Ringmagneten zur Bereitstellung der Senderfunktion bei eiriem bereits vorhandenen 6- oder 8-poligen Antriebsmotor die Anzahl der auswertbaren Signalimpulse je Ankerdrehung, also je Drehung des Motorankers um einen Drehwinkel von 360° vergleichsweise groß, so dass ein entsprechend hoch auflösendes Sensorsystem bereitgestellt ist.

Da sich zudem erkanntermaßen mit einer Änderung der Drehrichtung des Motorankers auch die Flankenform der Signalflanken oder Signalimpulse des Sensorsignals ändert, kann allein hieraus die Drehrichtung des Motors bestimmt werden. Des Weiteren ist die Positionserkennung eines mittels des Verstellantriebs bewegten Verstellelementes des Kraftfahrzeugs bereits deshalb mit vergleichsweise hoher Zuverlässigkeit ermöglicht, als einerseits die Anzahl der Signalimpulse des Sensorsignals und andererseits deren Wiederholgenauigkeit im Vergleich zu herkömmlichen Sensoren besonders groß ist.

Eine bevorzugte Position des Sensors ist eine um 90° gegenüber einer bei einem Kommutierungsmotor vorhandenen Kommutierungszone (neutraler Bereich) versetzte exponierte Stelle innerhalb des Erregefiauptfeldes. Hierbei kann der Sensor direkt in eine entsprechende Ausnehmung oder Öffnung innerhalb des jeweiligen Magnetpols eingesetzt sein. Eine zusätzliche oder alternative Position für den Sensor liegt im Bereich zwischen der Kommutierungszone und dem dieser benachbarten Magnetpol. Des Weiteren können mehrere Sensoren an verschiedenen exponierten Stellen innerhalb des Verstellantriebs positioniert sein.

Der jeweilige Sensor kann dabei direkt oder indirekt innerhalb des Antriebsmotors und dort an der jeweiligen exponierten Stelle des Erregerhauptfeldes angeordnet sein. Zur indirekten Anordnung ist der Sensor aus einem wiederum auf Basis des galvanomagnetischen Effektes arbeitenden Sensorelement und einem mit diesem verbunden magnetischen oder magnetisierbaren Vorspannelement aufgebaut. Das dann an der exponierten Stelle des Erregerhauptfeldes angeordnete Vorspannelement dient zur Bereitstellung des für den galvanomagnetischen oder Hall-Effekt erforderlichen Arbeitspunktes des Sensors. Bevorzugt ist dabei die jeweilige Position des Sensors möglichst unmittelbar in der Nähe des Luftspaltes zwischen den Magnetpolen und dem Motoranker. Prinzipiell ist somit der Sensor dem magnetischen Erregerfeld direkt oder indirekt ausgesetzt, um den Hall-Effekt, d.h. die durch das Magnetfeld und insbesondere durch dessen Änderung bewirkte Ladungstrennung des stromdurchflossenen Sensors möglichst effektiv zu nutzen.

Gemäß einer bevorzugten Variante ist der Sensor in einem Feldbereich des Antriebsmotors positioniert, indem dem stationären Erregerhauptfeld ein Querfeldanteil eines vom Motoranker erzeugten magnetischen Ankerquerfeldes überlagert ist. Je nach Drehrichtung des Motorankers ist dieser Querfeldanteil (Offset) additiv oder subtraktiv zum Erregerhauptfeld. Aus dem (positiven bzw. negativen) Vorzeichen des Offsets, d. h. aus der Orientierung des Querfeldanteils kann somit in einfacher und zuverlässiger Weise die Drehrichtung des Motorankers bzw. des Antriebsmotors erkannt und/oder bestimmt werden. Der Querfeldanteil bzw. Offset sollte dabei kleiner als 50%, vorzugsweise kleiner als 20%, des maximalen Ankerquerfeldes sein.

Diese Variante der Erfindung geht von der Überlegung aus, dass bei entsprechender, nachfolgend als Sensorposition bezeichneter Positionierung des Sensors positionsabhängig unterschiedlich große Feldanteile des vom Motoranker erzeugten Ankerquerfeldes dem Erregerhauptfeld überlagert sind. Dabei ist das Ankerquerfeld selbst, d.h. hinsichtlich dessen Feldstärke wiederum positionsunabhängig, jedoch abhängig vom Ankerstrom. Durch die Positionsunabhängigkeit einerseits und die Ankerstromabhängigkeit andererseits tritt der Effekt auf, dass in dem Sensorsignal ein zusätzlicher, vom Ankerstrom abhängiger Signalanteil (Offset) enthalten ist. Da der Ankerstrom wiederum direkt proportional dem Motormoment des Antriebsmotors ist, kann dieser zusätzliche Signalanteil zur Bestimmung des aktuellen Motormomentes herangezogen werden.

Das Motormoment wiederum ist ein Maß für die Gängigkeit des Antriebssystems und dabei insbesondere des von dem Verstellantrieb angetriebenen Verstellelementes des Kraftfahrzeugs. Über diesen zusätzlichen Signalanteil des Sensorsignals können somit Schwergängigkeiten und insbesondere Einklemmsituationen zuverlässig erkannt und deshalb für die Funktionalität eines Einklemmschutzsystems besonders vorteilhaft herangezogen werden.

Bei der Auswertung des während der Ankerdrehung eines Antriebsmotors erzeugten Sensorsignals, bei dem jeder Umdrehung des Motorankers eine der Anzahl der sich in Umfangsrichtung ändernden Umfangsabschnitte des Motorankers, insbesondere der Anzahl dessen Ankerzähne, eine entsprechende Anzahl von Signalimpulsen zugeordnet wird, wird somit vorzugsweise zusätzlich die Drehrichtung des Motorankers aus der Flankenform der Signalimpulse bestimmt.

Nachfolgend werden Ausführungsbeispiele der Erfindung anhand einer Zeichnung näher erläutert. Darin zeigen:
- Fig. 1: schematisch in einer Schnittdarstellung einen Antriebsmotor eines Verstellantriebs mit integrierter Sensorik,
- Fig. 2: in einer Darstellung gemäß Fig. 1 an exponierter Stelle zwischen einer Kommutierungszone und einem hierzu beabstandeten Magnetpol positionierte Sensoren,
- Fig. 3: in einer Darstellung gemäß Fig. 1 mit um 90° gedreht dargestelltem Antriebsmotor die Feldlinienverläufe eines stationären magnetischen Erregerhauptfeldes und eines Ankerquerfeldes,
- Fig. 4: die Überlagerung von Ankerquerfeld und Erregerhauptfeld in einem Flussdichte-Drehwinkel-Diagramm,
- Fig. 5: in einem Flussdichte-Drehwinkel-Diagramm den Induktionsverlauf eines 6-nutigen Motorankers, und
- Fig. 6: den Signalverlauf anhand einer Feldstärkemessung zur Ermittlung der Flussschwankung bei einem 8-nutigen Motoranker mit unterschiedlichen Pegeln der Induktionsamplituden.

Einander entsprechende Teile sind in allen Figuren mit den gleichen Bezugszeichen versehen.

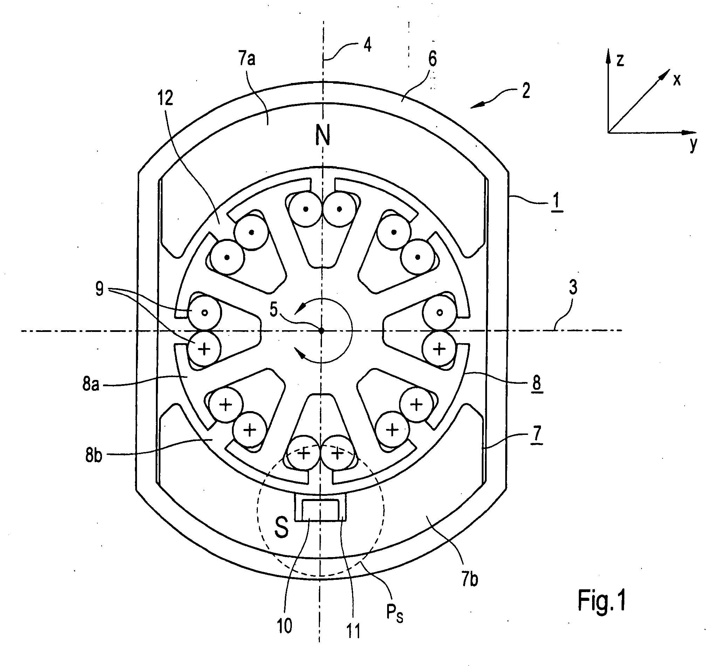

Die Fig. 1 bis 3 zeigen einen Antriebsmotor 1 als Teil eines Verstellantriebs 2 eines Kraftfahrzeugs. Im zentralen Kreuzungspunkt einer durch eine strichpunktierte Linie veranschaulichte, nachfolgend auch als Kommutierungszone bezeichnete neutrale Zone 3 und einer hierzu senkrecht verlaufenden strichpunktierten Linie 4 sitzt eine nachfolgend als Antriebswelle 5 bezeichnete Motor- oder Ankerwelle. Diese verläuft gemäß dem dargestellten Koordinatensystem in X-Richtung und damit senkrecht zur Zeichenebene. Die Kommutierungszone 3 verläuft dann in Y-Richtung, während die gedachte Verbindungslinie 4 zwischen einem magnetischen Nordpol N und einem magnetischen Südpol S in Z-Richtung verläuft. Die Antriebswelle 5 ist in nicht näher dargestellter Art und Weise beispielsweise über Koppelelemente mit einem Verstellelement, beispielsweise mit einer Fensterscheibe, einem Sitz, einer Heckklappe oder einem Schiebedach eines Kraftfahrzeugs gekoppelt. Der dargestellte Antriebsmotor 1 bildet mit den mit dem Verstellelement gekoppelten Koppelelementen den Verstellantrieb 2 des Kraftfahrzeugs.

Der Antriebsmotor weist innerhalb eines Poltopfes 6 einen 2-poligen Motormagneten 7 in Form eines Permanentmagneten mit einem Nordpol (N) 7a und einem diesem gegenüberliegend angeordneten Südpol (S) 7b sowie einen um die mit der Ankerwelle 5 zusammenfallende Drehachse drehbar angeordneten Motoranker 8 auf. Dieser wiederum umfasst im Ausführungsbeispiel acht Ankerzähne 8a und eine entsprechende Anzahl von dazwischenliegenden Ankernuten 8b auf. Die Ankerzähne 8a sind mit einem Wickelstrang oder einer bestrombaren Motorwicklung 9 bewickelt.

Ist die Motorwicklung 9 stromdurchflossen, so ist die Stromrichtung des resultierenden Ankerstromes I_{A} in den mit einem Punkt versehenen Wicklungsabschnitten aus der Zeichenebene heraus gerichtet und somit in (+)X-Richtung, während bei den mit einem Kreuz versehenen Wicklungsabschnitten die Stromrichtung des Ankerstromes I_{A} in die Zeichenebene hinein und somit in (-)X-Richtung verläuft.

In den Antriebsmotor 1 ist eine Sensorik integriert. Die Sensorik dient zur Positionserkennung des von dem Antriebsmotor 1 bewegten Verstellelementes sowie zur Erkennung der Drehrichtung des Motorankers 8. Ferner dient die Sensorik zur Erfassung oder Bestimmung der Motordrehzahl und ist zudem geeignet, das Motormoment und insbesondere Änderungen desselben zu ermitteln.

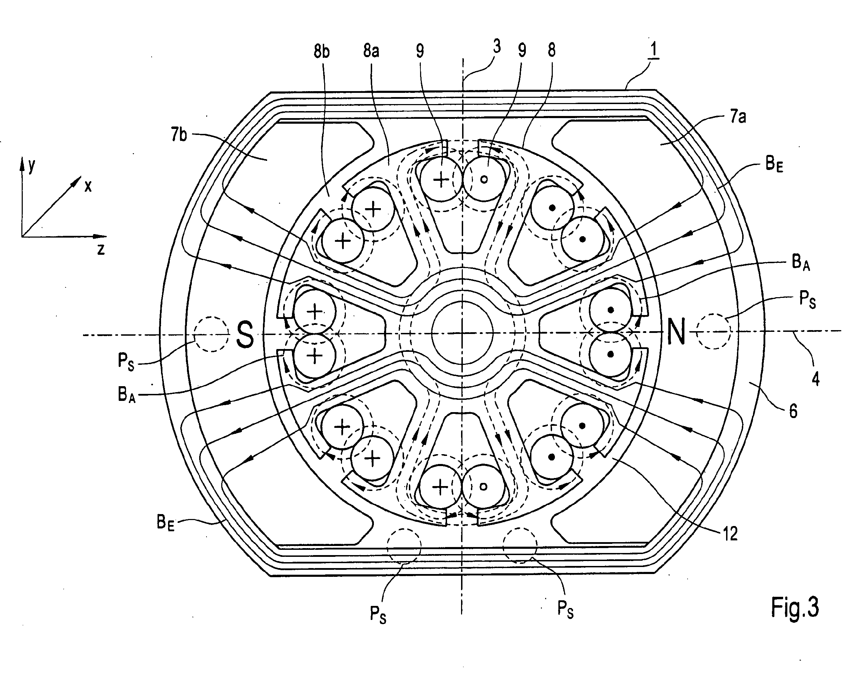

Für eine Sende- und Empfangsfunktionalität der Sensorik ist als separates Bauteil ein die Empfängerfunktionalität erfüllender magnetosensitiver Sensor 10 vorgesehen. Dem gegenüber ist für die Senderfunktionalität kein separates Bauteil erforderlich. Vielmehr wird die Senderfunktionalität unter Einsparung eines zusätzlichen Bauteils im Wesentlichen vom in Fig. 3 gezeigten stationären magnetischen Erregerhauptfeld B_{E} bereitgestellt, das von dem Motor- oder. Permanentmagneten 7 erzeugt wird.

Gemäß Fig. 3 zeigt der richtungsorientierte Verlauf des Erregerhauptfeldes B_{E} exponierte Stellen oder Orte für geeignete Sensorpositionen P_{S}. Fig. 1 zeigt eine bevorzugte Sensorposition P_{S} innerhalb eines der Magnetpole 7a,7b am Beispiel des im Bereich des Südpoles 7b positionierten Sensors 10. Dieser ist in einer Ausnehmung oder Öffnung 11 angeordnet, die im Ausführungsbeispiel in einen zwischen dem Motoranker 8 und den Magnetpolen 7a und 7b gebildeten Luftspalt 12 mündet. Die in Fig. 1 dargestellte Positionen P_{S} für den Sensor 10 innerhalb der Magnetpole 7 bzw. 7b ist gegenüber der Kommutierungszone 4 um einen Winkel von 90° versetzt.

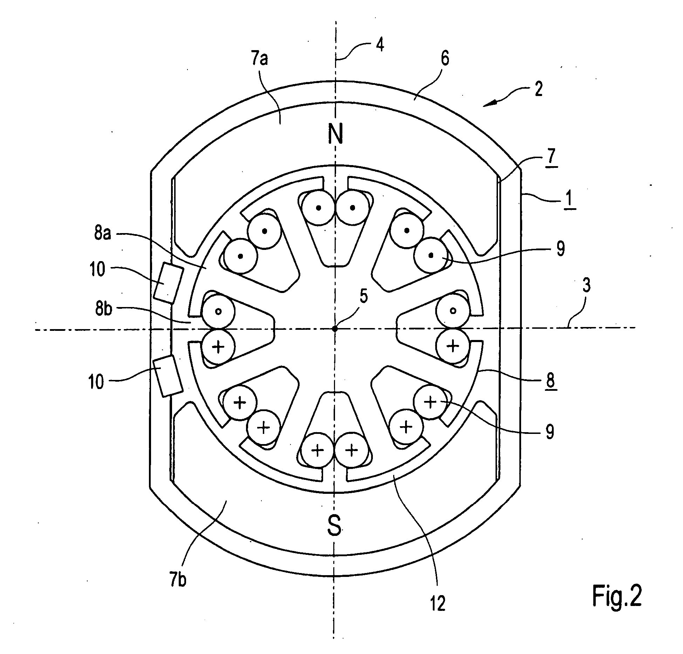

Alternative Positionierungen des Sensors 10 zeigt Fig. 2. Dort ist jeweils ein Sensor 10 in einem Bereich zwischen der Kommutierungszone 3 und den hierzu beabstandeten Magnetpolen 7a bzw. 7b des quasi den Stator oder Ständer des Antriebsmotors 1 bildenden Permanentmagneten 7 angeordnet. Auch ist eine Positionierung des oder jedes Sensors 10 direkt im Bereich der Kommutierungszone 4 möglich.

Zur Erläuterung der Funktionsweise der in den Verstellantrieb 2 und dort wiederum in den Antriebsmotor 1 integrierten Sensorik wird nachfolgend davon ausgegangen, dass der Sensor 10 ein Hall-Sensor ist. Hierbei wird der physikalische Hall-Effekt als einer der galvanomagnetischen Effekte genutzt, die in einem im (homogenen) Magnetfeld befindlichen Leiter auftreten, der von einem Strom durchflossen ist.

Durch die Anordnung des Sensors 10 vorzugsweise im Nahbereich des magnetischen Erregerhauptfeldes B_{E} erfolgt aufgrund des Hall-Effektes eine Ladungstrennung oder - verschiebung im von einem Sensorstrom I_{S} durchflossenen Sensor 10. Die dadurch am Sensor 10 abgreifbare Hall-Spannung U_{H} ist gemäß der Beziehung U_{H} ≈ I_{H} ≈ B bei konstantem Sensorstrom I_{S} direkt proportional zum Erregerhauptfeld B_{E}.

Bei sich nicht drehendem und somit still stehendem Motoranker 8 ist die von dem in den Antriebsmotor 1 integrierten Sensor 10 erzeugte Hall-Spannung U_{H} zumindest annähernd konstant. Während einer Drehung des Motorankers 8 passieren alternierend, d. h. abwechselnd oder zeitlich aufeinander folgend Ankerzahn 8a und Ankernut 8b den ortsfesten Sensor 10. Die Ankerzähne 8a und die Ankernuten 8b bilden dabei in Drehoder Umfangsrichtung 13 (Fig. 1) sich ändernde Umfangsabschnitte des Motorankers 8 mit alternierend wechselnden unterschiedlichen magnetischen Eigenschaften. Diese wiederum resultieren aus verschiedenen relativen Permeabilitäten µᵣ der eisenhaltigen Ankerzähne 8a und der Ankernuten 8b. Deren relative Permeabilität µᵣ (Luft) entspricht derjenigen von Luft, während die relative Permeabilität µᵣ (Fe) derjenigen von Eisen entspricht.

Mit anderen Worten: Steht ein Ankerzahn 8a dem Motormagneten 7 und dem Sensor 10 gegenüber, so führt dies zu einer vergleichsweise oder relativ großen Luftspaltinduktion und damit zu einem geringen magnetischen Widerstand im Bereich des Luftspaltes 12. Steht eine Ankernut 7b dem Magneten 7 und dem Sensor 10 gegenüber, so ist die Luftspaltinduktion vergleichsweise klein bzw. der magnetische Widerstand im Bereich des Luftspaltes 12 entsprechend vergleichsweise groß.

Gemäß der physikalischen Beziehung B = µᵣ · (µ₀ · H), mit H als magnetischer Feldstärke und µ₀ als Permeabilität von Luft, ändert sich mit der relativen Permeabilität µᵣ proportional die magnetische Flussdichte B. Die entsprechende Änderung ΔB der magnetischen Flussdichte B wird vom Sensor 10 erfasst. Das entsprechende Sensorsignal S enthält somit eine der Anzahl der Ankerzähne 8a bzw. der Ankernuten 8b entsprechende Anzahl von Signalimpulsen S_{I} während einer Ankerdrehung, d.h. während einer vollen Drehung des Motorankers 8 um einen Drehwinkel α von 360°.

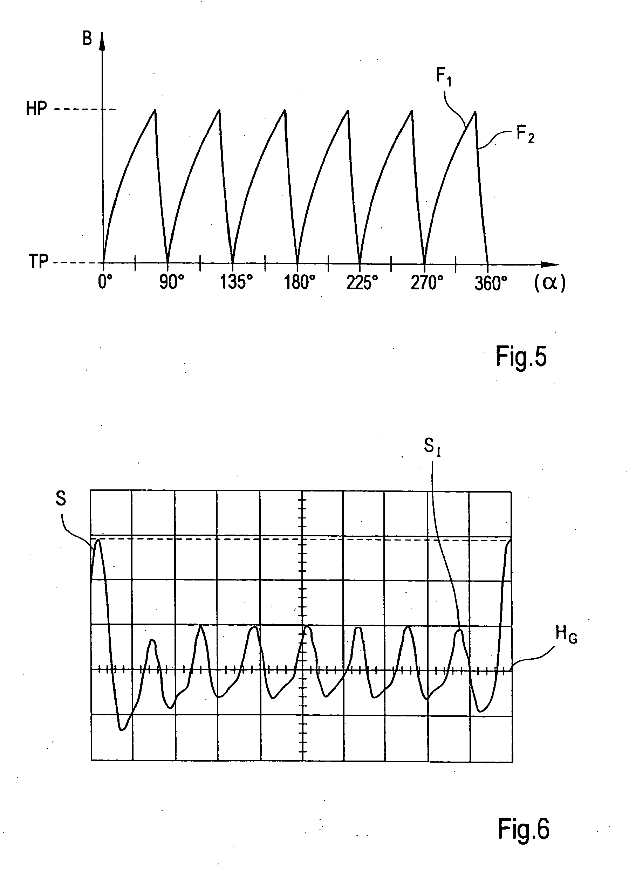

Ein solches Sensorsignal ist in Fig. 6 für einen 8-nutigen Motoranker 8 veranschaulicht. Die Darstellung gemäß Fig. 6 basiert dabei auf einer Grundfeldstärke H_{G} = B_{E} (µᵣ · µ₀)⁻¹ von beispielsweise 120 mT mit überlagertem Wechselfeld ΔB bei rotierendem Motoranker 8.

Einen entsprechenden theoretischen Induktionsverlauf zur Detektion eines magnetischen Ripple für einen sechsnutigen Motoranker 8 veranschaulicht Fig. 5. Ersichtlich sind dort in einem Flussdichte (B)-Drehwinkel (°)-Diagramm ein drehwinkelabhängig alternierender Hochpegel HP und ein Tiefpegel TP. Die Hochpegel HP treten auf, wenn ein Ankerzahn 8a den Sensor 10 passiert. Analog tritt der Tiefpegel TP auf, wenn eine Ankernut 8b den Sensor 10 passiert. Die Flankenform der dargestellten Impulse ist repräsentativ für die Drehrichtung 13 des Motorankers 8. Dabei repräsentiert die vordere Flankenform F₁ einen Rechtslauf des Motorankers 8, während die hintere Flankenform F₂ einen Linkslauf des Ankermotors 8 repräsentiert.

Die dargestellte Signalerzeugung des Sensorsignals S ist unabhängig davon, ob der Motoranker 8 bestromt ist oder ob dieser nicht bestromt ist. Grund hierfür ist, dass infolge der Wirkung des ständig vorhandenen stationären magnetischen Erregerhauptfeldes B_{E} ein Sensorsignal S auch bei nicht bestromtem, jedoch drehendem Motoranker 8 generiert wird. Eine solche Drehbewegung des Motorankers 8 kann beispielsweise dadurch erfolgen, dass das jeweilige Verstellelement des Kraftfahrzeugs bewegt und demzufolge über die Kraftkopplung - und damit den ununterbrochenen Kraftfluss - eine entsprechende äußere Kraft auf den Antriebsmotor 1 ausgeübt wird.

Dieser Effekt kann demzufolge als Sicherheitsoption genutzt werden, wenn das vom Antriebsmotor 1 im Normalfall angetriebene Verstellelement manuell bewegt und demzufolge ein Sensorsignal S aufgrund der Drehung des Motorankers 8 generiert wird, obwohl gleichzeitig kein Steuerbefehl zur Bestromung des Antriebsmotors 1 vorliegt. Dies ist beispielsweise bei einer unerwünschten äußeren Einwirkung durch Absenken der vom Antriebsmotor 1 angetriebenen Fahrzeugscheibe des entsprechenden Verstellantriebes 2 der Falle. Eine mit dem Sensor 10 verbundene Elektronik erkennt diesen manuellen Eingriff und kann beispielsweise eine mechanische, optische oder akustische Schutzreaktion auslösen.

Das stationäre, permanente magnetische Erregerhauptfeld B_{E} und die Änderung der magnetischen Flussdichte ΔB bzw. der veränderliche magnetische Widerstand von Ankerzahn 8a und Ankernut 8b bewirken eine magnetische Polfühligkeit. Diese wiederum ermöglicht eine fortlaufende Auswertung der Position, der Drehzahl oder einer Drehzahlschwankung sowie eine Auswertung oder Bestimmung der Drehrichtung 13 des Motorankers 8.

Aufgrund der kraftschlüssigen Kopplung des Antriebsmotors 1 über dessen Motoranker 8 mit dem Verstellelement des Kraftfahrzeuges kann somit ein Einklemmfall im Bereich des Verstellelementes bei entsprechender oder augenblicklicher Änderung der Signalfrequenz oder Periodendauer des Sensorsignals S erkannt werden. Dabei ist kein zusätzlicher (magnetischer) Sender erforderlich, da das permanent zur Verfügung stehende Enegerhauptfeld B_{E} und die permanent vorhandene Polfühligkeit zur Signalgenerierung bei bestromtem oder bei nicht bestromtem Motoranker 8 genutzt wird.

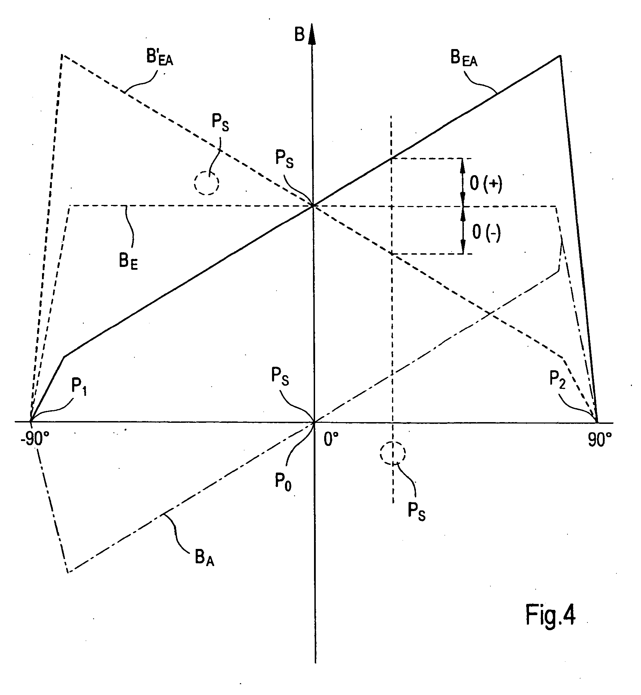

Als exponierte Sensorpositionen P_{S} zeichnen sich solche Stellen aus, an denen sich das stationäre, flussrichtungsdefinierte permanent magnetische Erregerhauptfeld B_{E} und ein nicht stationäres, fortlaufend im Bereich der neutralen oder Kommutierungszone 3 seine Flussrichtung änderndes dynamisches Ankerquerfeld B_{A} nicht oder nur geringfügig beeinflussen. Die entsprechenden physikalischen Zusammenhänge und die exponierten Sensorpositionen P_{S} sind in Fig. 4 veranschaulicht.

Dabei zeigt Fig. 4 in einem Flussdichte-Winkel-Diagramm zwischen (-)90° und (+)90° strichliniert den Verlauf des stationären Erregerhauptfeldes B_{E}. Des weiteren ist strichpunktiert das Ankerquerfeld B_{A} bei bestromtem Motoranker 8 veranschaulicht. Die Superposition oder Überlagerung von Ankerquerfeld B_{A} und stationärem Erregerhauptfeld B_{E} ist in Form der durchgezogenen und mit B_{EA} bezeichneten Summen- oder Überlagerungslinie veranschaulicht. Die durchgezogenen und mit B_{EA} bezeichnete Summen- bzw. Überlagerungslinie repräsentiert dabei eine erste Drehrichtung des Motorankers 8 bzw. des Antriebsmotors 1, während die mit B'_{EA} bezeichnete, gestrichelt dargestellte gespiegelte Summen- bzw. Überlagerungslinie dann die Gegenrichtung oder zweite Drehrichtung repräsentiert.

Ersichtlich ist, dass das Ankerquerfeld B_{A} am Ort des Nullpunktes P₀ praktisch nicht vorhanden ist (B_{A}(P₀) = 0) und zu den Winkelpositionen bei P₁(-90°) und bei P₂(+90°) hin jeweils etwa linear und mit umgekehrten Vorzeichen zunimmt. Im Bereich des 0°-Punktes P₀ ist demnach der Einfluss des Ankerquerfeldes B_{A} praktisch nicht vorhanden, während dieser in Richtung zunehmender Winkelgradbeträge ebenfalls zunimmt.

Dieser Effekt kann nun dazu genutzt werden, um einen gewissen Einfluss des Ankerquerfeldes B_{A} an der Sensorposition B_{S} zuzulassen, was durch die im zweiten und vierten Quadranten des Diagramms nach Fig. 4 durch strichlinierte Kreisdarstellungen veranschaulicht ist. An diesen Sensorpositionen Pₛ ist zusätzlich zum Erregerhauptfeld B_{E} ein Querfeldanteil B_{Q} des Ankerquerfeldes B_{A} vom Sensor 10 detektierbar. Da das Ankerquerfeld B_{A} von der Stärke oder vom Betrag des Ankerstroms I_{A} abhängig ist, ist demzufolge auch eine entsprechende Änderung des Ankerquerfeldes B_{A} über den entsprechenden Querfeldanteil B_{Q} detektierbar. Diese Änderungen oder Schwankungen des Querfeldanteils B_{Q} spiegelt sich als separater Signalanteil S_{A} im Sensorsignal S des Sensors 10 wieder. Da sich dieser Querfeldanteils B_{Q} je nach Drehrichtung des Motorankers 8 an der Sensorposition P_{S} additiv oder subtraktiv zum Erregerhauptfeld B_{E} verhält, führt die erste Drehrichtung des Motorankers 8 zu einem positiven Offset O(+), während die Gegenrichtung zu einem negativen Offset O(-) führt. Dies ist im ersten Quadranten des Diagramms in Fig. 4 veranschaulicht. Dieser Effekt kann zur Drehrichtungserkennung oder -bestimmung des Antriebsmotors 1 herangezogen werden.

Der (zweite) Signalanteil S_{A} kann - auch als Offset O(±) - aus dem Sensorsignal S_{EA}, dass den weiteren (ersten) Signalanteil S_{E} infolge des sich während einer Ankerdrehung des Motorankers 8 ändernden Erregerhauptfeldes B_{E} enthält, herausgefiltert werden. Dieser zweite Signalanteil S_{A} kann aufgrund der Proportionalität zwischen dem Ankerstrom I_{A} und dem Motormoment M des Antriebsmotors 1 zur Bestimmung des aktuellen Motormoments und/oder zur Drehrichtungserkennung herangezogen werden.

Ein sich änderndes Motormoment M wiederum spiegelt den Grad der Gängigkeit des Verstellantriebs 2 wieder. Demzufolge können Schwergängigkeiten des Verstellelementes des Verstellantriebs 2 über diesen zusätzlichen (zweiten) Signalanteil S_{A} detektiert und ausgewertet werden. So sind insbesondere Schwergängigkeiten des Verstellelementes des Verstellantriebs 2, insbesondere sowohl qualitativ als auch - quantitativ, erfassbar. Dies wiederum ist zur Detektion eines Einklemmfalls besonders vorteilhaft, zumal ein solcher Einklemmfall ein Spezialfall einer Schwergängigkeit des Verstellelementes des Verstellantriebs 2 sein kann.

Die Sensorposition P_{S} im Bereich der neutralen Zone oder Kommutierungszone 3 bietet den Vorteil, dass der Ankerstrom I_{A} im kommutierenden Stromstrang beim Durchlaufen der hinsichtlich des magnetischen Feldes H neutralen Zone 3 die Stromrichtung ändert. Dieser Effekt verursacht eine Schwankung des magnetischen Flusses bzw. der magnetischen Flussdichte B, die zur Generierung des Sensorsignals S genutzt werden kann. Mit dem Durchlaufen der neutralen Zone 3 ändert sich in den die dortige Sensorposition Pₛ passierenden Ankerzähnen 8a des bestromten Motorankers 8 infolge der Stromwendung (Kommutierung) die Flussrichtung des magnetischen Flusses und damit die magnetische Polarität bezogen auf diesen Teilbereich des Ankerquerfeldes B_{A}. Diese Polaritätsänderung kann zur Erkennung der Drehrichtung 13 des Motorankers 8 genutzt werden.

Ein weiterer Effekt besteht darin, dass bei Änderung der Strompolarität durch die Kommutierung sich die magnetische Polarität im Wickelstrang der Ankerwicklung 9 ändert. Eine exakte Zuordnung von Stromrichtung des Ankerstroms I_{A} und Drehrichtung 13 des Motorankers 8 aufgrund der richtungsabhängigen Flankenform des Sensorsignals S ermöglicht dann eine entsprechend genaue Zuordnung zwischen magnetischer Polarität und Drehrichtung 13.

Zudem können der Rechts- und Linkslauf und somit die Drehrichtung 13 des Motorankers 8 über die mit der Ankerdrehung des Motorankers 8 alternierende Flussverstärkung und die Flussschwächung durch das Ankerquerfeld B_{A} sowie durch dessen Flussrichtung bei Rechts- bzw. Linkslauf an der Sensorposition P_{S} über die unterschiedlichen Flussdichten B erfasst werden. Der Hall-Sensor 10 als für Änderungen der magnetischen Flussdicht B magnetosensitives Sensorelement erkennt in der Reihenfolge Nord-Südpol z. B. einen Rechtslauf und in der Reihenfolge Süd-Nordpol einen Linkslauf des Motorankers 8. Ein Rechts- oder Linkslauf des Motorankers 8 ist somit über die in Fig. 5 veranschaulichte Amplitudenform der ansteigenden und abfallenden Flanke und damit über die Flankenform F₁ bzw. F₂ und/oder über den Flankenanstieg erkennbar.

Auch können angesteuerte Sensoren 10 aufgrund des sich in der neutralen Zone 3 verändernden Ankerquerfeldes B_{A} einerseits und durch das Erregerhauptfeld B_{E} angesteuerte Sensoren 10 andererseits miteinander zu einer verbesserten Signalerfassung kombiniert und/oder verschaltet werden.

Auch kann der oder jeder Sensor 10, der die Empfängerfunktionalität der Sensorik übernimmt, außerhalb des Poltopfes 6 des Antriebsmotors 1 positioniert werden. Zudem kann in nicht näher dargestellter Art und Weise durch eine Öffnung im Poltopf 6 der Sensor 10 an einer exponierten Position P_{S} des Antriebsmotors 1 angeordnet werden.

Bei Anordnung außerhalb des Poltopfes P ist der Sensors 10 in nicht näher dargestellter Art und Weise aus einem innerhalb oder außerhalb des Poltopfes P angeordneten Sensorelement und einem mit diesem verbundenen magnetischen oder magnetisierbaren Vorspannelement (Vorspannmagneten) aufgebaut. Das beispielsweise als Vorspannmagnet ausgeführte Vorspannelement dient dann, wenn es dem Erregerhauptfeld B_{E} direkt ausgesetzt ist, indirekt zur Bestimmung oder Festlegung des für den Hall-Effekt erforderlichen Arbeitspunktes des Sensors 10. Als selbst magnetisches Vorspannelement kann es den Arbeitspunkt zusätzlich oder alternativ direkt festlegen.

Die erfindungsgemäße Integration der Sensorik mit dem Sensor 10 in den Antriebsmotor 1 des Verstellantriebs 2 führt vorzugsweise zu einer Einsparung von Bauteilen, zumal zur Bereitstellung der Sender-Empfänger-Funktionalität kein zusätzliches Element notwendig ist. Zudem ist eine Zählung der Signalimpulse S_{I} auch bei nicht bestromtem Motoranker 8 möglich. Ferner stehen gegenüber einer herkömmlichen Sensorik eine vergleichsweise große Anzahl von Signalimpulsen S_{I} im Sensorsignal S bei jeder Drehung des Motorankers 8 zur Verfügung. Dies wiederum erhöht die Auflösung der Sensorik und damit die Zuverlässigkeit des Verstellantriebs 2 im Hinblick auf die gewünschte Positions-, Drehrichtungs- Einklemmfall- und/oder Drehzahländerungserkennung.

### Bezugszeichenliste

- 1: Antriebsmotor
- 2: Verstellantrieb
- 3: Kommutierungszone / neutrale Zone
- 4: Verbindungslinie
- 5: Antriebswelle
- 6: Poltopf
- 7: Motormagnet
- 7a: Nordpol N
- 7b: Südpol S
- 8: Motoranker
- 8a: Ankerzahn
- 8b: Ankernut
- 9: Motorwicklung
- 10: Sensor
- 11: Ausnehmung/Öffnung
- 12: Luftspalt
- 13: Dreh-/Umfangsrichtung

- B: Flussdichte
- B_{E}: Erregerhauptfeld
- B_{A}: Ankerquerfeld
- B_{Q}: Querfeldanteil
- F₁: Flankenform (Rechtslauf)
- F₂: Flankenform (Linkslauf)
- I_{A}: Ankerstrom
- I_{S}: Sensorstrom
- H_{G}: Grundfeldstärke
- HP: Hochpegel
- M: Motormoment
- O(±): Offset
- P_{S}: Sensorposition
- S: Sensorsignal
- S_{A,E}: Signalanteil
- S_{I}: Signalimpuls
- TP: Tiefpegel

## Patentansprüche

1. Verfahren zur Auswertung eines Sensorsignals (S), das während der Ankerdrehungen (13) eines Antriebsmotors (1) vom Motoranker (8), der von einem Ankerstrom (I_{A}) durchflossen ist, erzeugt wird,
- wobei das Sensorsignal (S) einen in Folge der Änderung der magnetischen Flussdichte (ΔB) des Erregerhauptfeldes (B_{E}) generierten ersten Signalanteil (S_{E}) und einen in Folge eines Querfeldanteils (B_{Q}) eines Ankerquerfeldes (B_{A}) an einer Sensorposition (P_{S}) generierten und vom Betrag des Ankerstroms (I_{A}) abhängigen zweiten Signalanteil (S_{A}) enthält,
- wobei der zweite Signalanteil (S_{A}) zur Bestimmung des aktuellen Motormomentes (M) des Antriebsmotors (1) aus dem Sensorsignal (S) herausgefiltert wird, und
- wobei jeder Umdrehung eines Motorankers (8) eine der Anzahl von Ankerzähnen (8a) entsprechende Anzahl von Signalimpulsen (S_{I}) zugeordnet wird.

2. Verfahren nach Anspruch 1, bei dem die Drehrichtung (13) des Motorankers (8) aus der Flankenform (F₁, F₂) des Sensorsignals (S) bestimmt wird.

3. Verfahren nach Anspruch 1 oder 2, bei dem die Drehrichtung (13) des Motorankers (8) aus der Orientierung des Querfeldanteils (B_{Q}) bestimmt wird.

4. Verfahren nach einem der Ansprüche 1 bis 3, bei dem zur Drehrichtungsbestimmung ein infolge des Querfeldanteil (B_{Q}) des Ankerquerfeldes (B_{A}) auftretender Offset (O(±)) herangezogen wird, wobei bei einem positiven Offset (O(+)) auf eine erste Drehrichtung des Motorankers (8) und bei einem negativen Offset (O(+)) auf die Gegenrichtung erkannt wird.

5. Verstellantrieb (2) eines Kraftfahrzeugs, mit einem Antriebsmotor (1), der einen ein magnetisches Erregerhauptfeld (B_{E}) erzeugenden Motormagneten (7) und einen zwischen dessen Magnetpolen (7a, 7b) drehbar angeordneten Motoranker (8) aufweist, und mit einer Vorrichtung zur Durchführung des Verfahrens nach einem der Ansprüche 1 bis 4, mit einem dem Antriebsmotor (1) zugeordneten magnetosensitiven Sensor (10) zur Erfassung einer magnetischen Flussdichteänderung (ΔB), einer magnetischen Widerstandsänderung und/oder einer Induktionsänderung, wobei bei vom Ankerstrom (I_{A}) durchflossenem Motoranker (8) das vom Sensor (10) erzeugte Signal (S)
einen in Folge der Änderung der magnetischen Flussdichte (ΔB) des Erregerhauptfeldes (B_{E}) generierten ersten Signalanteil (S_{E}) und einen in Folge eines Querfeldanteils (B_{Q}) eines Ankerquerfeldes (B_{A}) an einer Sensorposition (Pₛ) generierten und vom Betrag des Ankerstroms (1_{A}) abhängigen zweiten Signalanteil (S_{A}) enthält,
wobei die Vorrichtung Mittel aufweist,
- um den zweiten Signalanteil (S_{A}) zur Bestimmung des aktuellen Motormomentes (M) des Antriebsmotors (1) aus dem Sensorsignal (S) herauszufiltern, und
- um jeder Umdrehung des Motorankers (8) eine der Anzahl von Ankerzähnen (8a) entsprechende Anzahl von Signalimpulsen (S_{I}) zuzuordnen.

6. Verstellantrieb nach Anspruch 5, wobei der magnetosensitive Sensor (10) derart positioniert ist, dass dieser während einer Drehung (13) des Motorankers (8) eine Änderung der magnetischen Flussdichte (ΔB) des Erregerhauptfeldes (B_{E}) erfasst.

7. Verstellantrieb nach Anspruch 5 oder 6, wobei der Sensor (10) bei jeder Ankerdrehung (13) ein Signal (S) mit einer der Anzahl der Ankerzähne (8a) entsprechenden Anzahl von Signalimpulsen (S_{I}) erzeugt.

8. Verstellantrieb nach einem der Ansprüche 5 bis 7, wobei der Sensor (10) in einem Feldbereich positioniert ist, in dem dem Erregerhauptfeld (B_{E}) ein Querfeldanteil (B₀) eines vom Motoranker (8) erzeugten magnetischen Ankerquerfeldes (B_{A}) überlagert ist.

9. Verstellantrieb nach nach einem der Ansprüche 5 bis 8, wobei an der Position (P_{S}) des Sensors (10) der Querfeldanteil (B_{Q}) des maximalen Ankerquerfeldes (B_{A}) kleiner als 50%, insbesondere kleiner als 20%, vorzugsweise kleiner oder gleich 10% ist.

10. Verstellantrieb nach einem der Ansprüche 5 bis 9, wobei ein von einem Strom (I_{S}) durchflossener Sensor (10) vorgesehen ist, der bei alternierend passierenden Umfangsabschnitten (8a, 8b) des Motorankers (8) eine aus unterschiedlichen magnetischen Widerständen resultierende Änderung eines Signalpegels (HP, TP), insbesondere einer Hall-Spannung (U_{H}), erfasst.

11. Verstellantrieb nach einem der Ansprüche 5 bis 10, wobei der Sensor (10) der Sensor (10) innerhalb des Antriebsmotors (1) polseitig eines zwischen dem Magnetpolen (7a, 7b) und dem Motoranker (8) gebildeten Luftspaltes (12) angeordnet ist.

12. Verstellantrieb nach einem der Ansprüche 5 bis 11, wobei der Sensor (10) zwischen der Kommutierungszone (3) des Antriebsmotors (1) und einem der Magnetpole (7a, 7b) des Motormagneten (7) positioniert ist.

## Claims

1. Method for evaluating a sensor signal (S) which is generated, during armature rotations (13) of a drive motor (1), by the motor armature (8), through which an armature current (I_{A}) is passed,
- wherein the sensor signal (S) contains a first signal component (S_{E}), which is generated as a result of the change in the magnetic flux density (ΔB) of the exciter main field (B_{E}), and a second signal component (S_{A}), which is generated as a result of a transverse field component (B_{Q}) of an armature transverse field (B_{A}) at a sensor position (Pₛ) and is dependent on the absolute value of the armature current (I_{A}),
- wherein the second signal component (S_{A}) is filtered out from the sensor signal (S) to determine the current motor torque (M) of the drive motor (1), and
- wherein a number of signal pulses (S_{I}) corresponding to the number of armature teeth (8a) is assigned to each rotation of a motor armature (8).

2. Method according to claim 1, wherein the direction of rotation (13) of the motor armature (8) is determined from the edge shape (F₁, F₂) of the sensor signal (S).

3. Method according to claim 1 or 2, wherein the direction of rotation (13) of the motor armature (8) is determined from the orientation of the transverse field component (B_{Q}).

4. Method according to one of claims 1 to 3, wherein an offset (O(±)) which occurs as a result of the transverse field component (B_{Q}) of the armature transverse field (B_{A}) is used to determine the direction of rotation, a first direction of rotation of the motor armature (8) being detected when there is a positive offset (O(+)), and an opposed direction of rotation being detected when there is a negative offset (O(+)).

5. Adjustment drive (2) of a motor vehicle, said adjustment drive comprising a drive motor (1), which has a motor magnet (7) which generates a magnetic exciter main field (B_{E}) and a motor armature (8) which is arranged rotatably between the magnet poles (7a, 7b) of said motor magnet, and comprising a device for carrying out the method according to one of claims 1 to 4, said device comprising a magneto-sensitive sensor (10) assigned to the drive motor (1) for detecting a change in magnetic flux density (ΔB), a change in magnetic resistance and/or a change in induction, wherein, when the armature current (I_{A}) passes through the motor armature (8), the signal (S) generated by the sensor (10) contains a first signal component (S_{E}), which is generated as a result of the change in the magnetic flux density (ΔB) of the exciter main field (BE), and a second signal component (S_{A}), which is generated as a result of a transverse field component (B_{Q}) of an armature transverse field (B_{A}) at a sensor position (Pₛ) and is dependent on the absolute value of the armature current (I_{A}),
the device comprising means
- for filtering out the second signal component (S_{A}) from the sensor signal (S) to determine the current motor torque (M) of the drive motor (1), and
- for assigning to each rotation of a motor armature (8) a number of signal pulses (S_{I}) corresponding to the number of armature teeth (8a).

6. Adjustment drive according to claim 5, wherein the magneto-sensitive sensor (10) is positioned in such a way that it detects a change in the magnetic flux density (ΔB) of the exciter main field (B_{E}) during a rotation (13) of the motor armature (8).

7. Adjustment drive according to claim 5 or 6, wherein, at each armature rotation (13), the sensor (10) generates a signal (S) comprising a number of signal pulses (S_{I}) corresponding to the number of armature teeth (8a).

8. Adjustment drive according to one of claims 5 to 7, wherein the sensor (10) is positioned in a field area in which a transverse field component (B_{Q}) of a magnetic armature transverse field (B_{A}) generated by the motor armature (8) is superposed on the exciter main field (B_{E}).

9. Adjustment drive according to one of claims 5 to 8, wherein the transverse field component (B_{Q}) of the maximum armature transverse field (B_{A}) is less than 50 %, in particular less than 20 %, preferably less than or equal to 10 %, at the position (Pₛ) of the sensor (10).

10. Adjustment drive according to one of claims 5 to 9, wherein a sensor (10) through which a current (I_{S}) is passed is provided and, with circumferential sections (8a, 8b) of the motor armature (8) passing alternately, detects a change in a signal level (HP, TP), in particular a Hall voltage (U_{H}), resulting from different magnetic resistances.

11. Adjustment drive according to one of claims 5 to 10, wherein the sensor (10) is arranged within the drive motor (1) on the pole side of an air gap (12) which is formed between the magnet pole (7a, 7b) and the motor armature (8).

12. Adjustment drive according to one of claims 5 to 11, wherein the sensor (10) is positioned between the commutation zone (3) of the drive motor (1) and one of the magnet poles (7a, 7b) of the motor magnet (7).

## Revendications

1. Procédé pour traiter et exploiter un signal de capteur (S) produit pendant les rotations d'induit (13) d'un moteur d'entraînement (1), par l'induit de moteur (8), qui est traversé par un courant d'induit (I_{A}),
- d'après lequel le signal de capteur (S) renferme une première fraction de signal (S_{E}) générée en raison de la variation de la densité de flux magnétique (ΔB) du champ principal d'excitation (B_{E}), et une deuxième fraction de signal (S_{A}) qui est générée en raison d'une fraction de champ transversal (B_{Q}) d'un champ transversal d'induit (B_{A}) au niveau d'une position de capteur (P_{S}), et est fonction de la valeur du courant d'induit (I_{A}),
- d'après lequel on extrait par filtrage la deuxième fraction de signal (S_{A}) du signal de capteur (S) pour la détermination du couple moteur (M) actuel du moteur d'entraînement (1), et
- d'après lequel on affecte à chaque tour de rotation d'un induit de moteur (8) un nombre d'impulsions de signal (S_{I}) correspondant au nombre de dents d'induit (8a).

2. Procédé selon la revendication 1, d'après lequel on détermine le sens de rotation (13) de l'induit de moteur (8) à partir de la forme de flanc (F₁, F₂) du signal de capteur (S).

3. Procédé selon la revendication 1 ou la revendication 2, d'après lequel on détermine le sens de rotation (13) de l'induit de moteur (8) à partir de l'orientation de la fraction de champ transversal (B_{Q}).

4. Procédé selon l'une des revendications 1 à 3, d'après lequel pour la détermination du sens de rotation, on se sert d'un offset (O(±)) apparaissant en raison de la fraction de champ transversal (B_{Q}) du champ transversal d'induit (B_{A}), et on conclut à un premier sens de rotation de l'induit de moteur (8) dans le cas d'un offset positif (O(+)), et au sens de rotation opposé dans le cas d'un offset négatif (O(-)).

5. Ensemble d'entraînement de réglage (2) d'un véhicule automobile, comprenant un moteur d'entrainement (1), qui présente un aimant de moteur (7) engendrant un champ principal d'excitation (B_{E}) magnétique, et un induit de moteur (8) agencé de manière rotative entre ses pôles d'aimant (7a, 7b), et comprenant également un dispositif pour la mise en oeuvre du procédé selon l'une des revendications 1 à 4, avec un capteur magnéto-sensible (10) associé au moteur d'entraînement (1) et destiné à relever une variation de densité de flux magnétique (ΔB), une variation de résistance magnétique et/ou une variation d'induction, l'ensemble étant tel que le signal (S) produit par le capteur (10) lorsque l'induit de moteur (8) est traversé par le courant d'induit (I_{A}), renferme une première fraction de signal (S_{E}) générée en raison de la variation de la densité de flux magnétique (ΔB) du champ principal d'excitation (B_{E}), et une deuxième fraction de signal (S_{A}) qui est générée en raison d'une fraction de champ transversal (B_{Q}) d'un champ transversal d'induit (B_{A}) au niveau d'une position de capteur (P_{S}), et est fonction de la valeur du courant d'induit (I_{A}),
le dispositif présentant des moyens
- pour extraire par filtrage la deuxième fraction de signal (S_{A}) du signal de capteur (S) pour la détermination du couple moteur (M) actuel du moteur d'entraînement (1), et
- pour affecter à chaque tour de rotation de l'induit de moteur (8) un nombre d'impulsions de signal (S_{I}) correspondant au nombre de dents d'induit (8a).

6. Ensemble d'entraînement de réglage selon la revendication 5, dans lequel le capteur magnéto-sensible (10) est positionné de manière telle, qu'il relève pendant une rotation (13) de l'induit de moteur (8), une variation de la densité de flux magnétique (ΔB) du champ principal d'excitation (B_{E}).

7. Ensemble d'entraînement de réglage selon la revendication 5 ou la revendication 6, dans lequel le capteur (10) produit, à chaque rotation d'induit (13), un signal (S) avec un nombre d'impulsions de signal (S_{I}) correspondant au nombre des dents d'induit (8a).

8. Ensemble d'entraînement de réglage selon l'une des revendications 5 à 7, dans lequel le capteur (10) est positionné dans une zone de champ dans laquelle au champ principal d'excitation (B_{E}) est superposée une fraction de champ transversal (B_{Q}) d'un champ transversal magnétique d'induit (B_{A}) produit par l'induit de moteur (8).

9. Ensemble d'entraînement de réglage selon l'une des revendications 5 à 8, dans lequel au niveau de la position (Pₛ) du capteur (10), la fraction de champ transversal (B_{Q}) du champ transversal d'induit maximal (B_{A}) est inférieure à 50%, notamment inférieure à 20%, et de préférence inférieure ou égale à 10%.

10. Ensemble d'entraînement de réglage selon l'une des revendications 5 à 9, dans lequel il est prévu un capteur (10) traversé par un courant (I_{S}), qui relève, lors du passage alterné de secteurs périphériques (8a, 8b) de l'induit de moteur (8), une variation d'un niveau de signal (HP, TP), notamment d'une tension de Hall (U_{H}), résultant de résistances magnétiques différentes.

11. Ensemble d'entraînement de réglage selon l'une des revendications 5 à 10, dans lequel le capteur (10) est agencé à l'intérieur du moteur d'entraînement (1), du côté polaire d'un entrefer (12) formé entre les pôles magnétiques (7a, 7b) et l'induit de moteur (8).

12. Ensemble d'entraînement de réglage selon l'une des revendications 5 à 11, dans lequel le capteur (10) est positionné entre la zone de commutation (3) du moteur d'entraînement (1) et l'un des pôles magnétiques (7a, 7b) de l'aimant de moteur (7).
